# EUROPEAN PATENT SPECIFICATION

(11) **EP 4 541 009 B1**
(45) Date of publication and mention of the grant of the patent: **03.06.2026**
(21) Application number: 22839335.1
(22) Date of filing: 21.12.2022
(51) Int. Cl.: H04M 1/02, G06F 1/16

(54) **ROLLING DISPLAY DRIVE ASSEMBLY**
ROLLANZEIGEANTRIEBSANORDNUNG
ENSEMBLE D'ENTRAÎNEMENT D'AFFICHAGE ROULANT

(43) Date of publication of application: 23.04.2025
(73) Proprietor: Huawei Technologies Co., Ltd., Shenzhen, Guangdong 518129 (CN)
(72) Inventor: PELTOLUHTA, Eetu, 16440 Kista (SE)
(74) Representative: Körber, Martin Hans
(86) International application number: PCT/EP2022/087298
(87) International publication number: WO 2024/132133

(56) References cited:
- WO-A1-2021/167419
- US-A1- 2013 233 108
- US-A1- 2022 361 347

## Description

### TECHNICAL FIELD

The disclosure relates to a drive assembly for a rolling display, the drive assembly comprising a lead screw and a drive unit configured to rotate the lead screw around a screw rotation axis. The disclosure also relates to a rolling display device comprising a first frame, a second frame configured to slidably move relative to the first frame, a rolling display, and the previously mentioned a drive assembly.

### BACKGROUND

The size of electronic devices, such as tablets and mobile phones, is an important consideration when designing mobile devices. In order to provide the best mobile device possible, the outer dimensions of the device have to be as small as is technically feasible, while still allowing the display of the device to be as large as possible.

This problem may be solved by means of a foldable device comprising pivotable frames that support the display panel and that are interconnected by means of hinges and which support the display panel.

However, the thickness of such an electronic device becomes substantial, when folded, due to the frames being stacked on top of each other. The thickness may even be larger than the width, wherefore such a folded electronic device is bulky and aesthetically unappealing. The continuous folding of the display panel may lead to permanent deformation due to fatigue, since the folded area is subject to very high stress. Furthermore, the foldable configuration also makes the device electronically complicated.

A different solution comprises frames that are slidable relative each other. The frames are arranged such that one frame substantially encloses the other frame(s) when the device is in a collapsed state. As the device is expanded, the frames slide away from each other, decreasing the overlap between frames and, hence, increasing the frame area as well as the visible display area. The display panel is configured to fold around, as well as slide across, a bend axis such that the size of the visible display area changes as the frames slide relative each other.

If the display panel is not under tension, the flexibility of the display panel may result in buckling when collapsing the device, effectively hindering the sliding action. Furthermore, by tensioning the display, visible bumps that are due to the tendency of the display panel to resist bending can be avoided.

However, tensioning of the display panel can lead to increased shear strain on the display panel as well as an increased risk of tearing the display surface. Furthermore, all unnecessary components are to be avoided in order to achieve the desired small form factor and low weight of the device.

WO 2021/167419 A1 discloses a display device having an adjustable screen size, wherein a sliding module using rotations of first and second screws is installed inside the display device so as to eject a display panel, inserted in the display device, out of the display device according to a user's request, whereby the display panel can be used with a wider area.

### SUMMARY

It is an object to provide an improved display arrangement. The foregoing and other objects are achieved by the features of the appended claims. In the following, parts of the description and drawings referring to embodiments which are not covered by the claims are not embodiments of the invention, but are examples useful for understanding the invention.

According to a first aspect, there is provided a drive assembly for a rolling display, the drive assembly comprising a lead screw; a drive unit configured to rotate the lead screw around a screw rotation axis; a first split nut arranged adjacent to the lead screw; a second split nut arranged adjacent to the lead screw on an opposite side thereof with respect to the first split nut; wherein both the first split nut and the second split nut are restricted from rotating around the screw rotation axis (A2);
wherein the lead screw is threaded bi-directionally with opposing screw threads for converting the rotational movement of the lead screw into longitudinal movement of the first split nut and the second split nut in opposing directions along the screw rotation axis; wherein the opposing screw threads are arranged to at least partially overlap along the length of the lead screw; and wherein the first split nut and the second split nut are shaped as partial radial segments of a whole nut arranged to fit around the lead screw.

This solution allows both the first split nut and the second split nut to move along the entire length of the lead screw, i.e. the first split nut and the second split nut to swap positions while still maintaining as much contact area as possible with the lead screw. Furthermore, the number of components required to provide bidirectional tension on the display panel is reduced, facilitating assembly and reducing volume and weight of the drive assembly.

In a possible implementation form of the first aspect, the first split nut is shaped as a partial radial segment of a whole nut corresponding to a first sector angle; the second split nut is shaped as a partial radial segment of a whole nut corresponding to a second sector angle; and wherein the first sector angle and second sector angle together add up to equal or less than 360 degrees. This facilitates finding a balance between manufacturing tolerances and ease of assembly, and contact area. The contact area with the lead screw 10 should be as large as possible in order to reduce the strain on the threads, which may lead to a shortened life span due to cracking under stress.

In a further possible implementation form of the first aspect, the first split nut and the second split nut are shaped to allow for a clearance in between when traveling past each other along the lead screw in opposite directions, ensuring the first split nut and the second split nut can move along the lead screw without being affected by each other.

In a further possible implementation form of the first aspect, in a first position of the drive assembly, the first split nut is arranged at a first end of the lead screw and the second split nut is arranged at a second end of the lead screw; and, in a second position of the drive assembly, the first split nut is arranged at the second end of the lead screw and the second split nut is arranged at the first end of the lead screw. This allows for a maximum range of movement, i.e. maximum play, for the rolling display extension.

In a further possible implementation form of the first aspect, the first screw thread matches the second screw thread, resulting in the display end velocities will be identical, thus the display tension remaining constant during the opening/closing operation.

In a further possible implementation form of the first aspect, the nut threads and screw threads are arranged with different thread profiles, number of starts, and/or pitches, allowing different tensioning options.

In a further possible implementation form of the first aspect, a first nut thread and a second nut thread of the respective split nuts are arranged with a single thread axis that is coincident with lead screw rotation axis when assembled in the drive assembly, simplifying manufacture and assembly.

In a further possible implementation form of the first aspect, the first split nut is arranged with a first nut thread; the second split nut is arranged with a second nut thread; and the lead screw comprises a first screw thread corresponding to the first nut thread arranged thereon for slidably guiding the first split nut and a second screw thread corresponding to the second nut thread arranged thereon for slidably guiding the second split nut in an opposite direction to the first split nut along the screw rotation axis, allowing all possible types of configurations that could be necessary to fit a specific device form factor or display solution.

In a further possible implementation form of the first aspect, the first screw thread and the second screw thread are both arranged with two thread starts. This configuration is well-functioning enough for most types of lead screws.

In a further possible implementation form of the first aspect, the first screw thread and the second screw thread are both arranged with three thread starts. This allows a more accurate fit to specific display dimensions and also facilitates assembly.

In a further possible implementation form of the first aspect, the first screw thread differs from the second screw thread in at least one of thread size, number of thread starts, and thread pitches. This allows use of different nuts on each end and, hence, more configuration options. In a further possible implementation form of the first aspect, the first screw thread differs from the second screw thread in at least the shape of its respective thread profiles. This allows use of different nuts on each end and, hence, more configuration options.

According to a second aspect, there is provided a rolling display device comprising: a first frame, and a second frame configured to slidably move relative to the first frame; a rolling display comprising a fixed display end fixedly attached to the first frame and a moving display end slidably connected to the second frame, at least a portion of the rolling display being arranged to roll around a display bend axis located in the second frame; and a drive assembly as previously detailed; wherein the first split nut of the drive assembly is connected to the fixed display end, and the second split nut of the drive assembly is connected to the moving display end, the drive assembly being thus configured to move the display bend axis relative to the fixed display end, thereby adjusting an effective display area of the flexible display.

This solution allows a device wherein the rolling display is less likely to deform and wherein the drive components take up less space, are less subject to wear, and are easier to assemble. In a possible implementation form of the second aspect, the rolling display device comprises a single drive assembly for adjusting an effective display area of the flexible display, such that the drive assembly takes up as little space as possible within the device.

In a further possible implementation form of the second aspect, the rolling display device comprises two drive assemblies arranged in parallel along for adjusting an effective display area of the flexible display, ensuring the rolling display moves along a fixed track without distorting.

In a further possible implementation form of the second aspect, the first split nut is indirectly connected to the fixed display end, through a rigid connection with the first frame, providing a simple, small, yet reliable connection.

In a further possible implementation form of the second aspect, the first split nut is arranged at a distance from the distal end of the fixed display end, the distance being at least a portion of the length of the lead screw, preferably at least the entire length of the lead screw, facilitating an as large extension of the rolling display as possible.

In a further possible implementation form of the second aspect, the second split nut is indirectly connected to the moving display end via a support plate, the support plate being connected to or integral with a flexible display support attached to the moving display end. This prevents the display from becoming wrinkled and/or permanently deformed since the display neither stretches nor compresses.

In a further possible implementation form of the second aspect, the moving display end, the support plate and the flexible display support are arranged to slide in the second frame, providing an as compact device as possible.

In a further possible implementation form of the second aspect, the drive assembly is located on the second frame, in which the display bend axis is located, allowing the first frame to be as lightweight as possible, hence, facilitating the movement of the rolling display.

In a further possible implementation form of the second aspect, one or both of the split nuts may be individual components or may be directly integrated to another component, e.g. a frame or the display support plate, allowing maximum flexibility when designing the device.

In a further possible implementation form of the second aspect, the display and/or the flexible display support is pre-tensioned, ensuring the display is always flat and does not distort.

In a further possible implementation form of the second aspect, the drive assembly comprises a drive unit with a shaft, the rotation of the shaft being directly or indirectly coupled to the rotation of the lead screw, allowing maximum flexibility when designing the device.

In a further possible implementation form of the second aspect, the drive unit is a motor, and the lead screw is self-locking, allowing the movement of the rollable display to be automated.

In a further possible implementation form of the second aspect, the drive unit is manually operated, and the lead screw is not self-locking, allowing the movement of the rollable display to be executed by an as simple solution as possible.

In a further possible implementation form of the second aspect, the rotation of the shaft is indirectly coupled to the rotation of the lead screw through a gearbox between the drive unit and the lead screw, which may change the rotation rate and/or direction between the drive unit and the lead screw.

In a further possible implementation form of the second aspect, the drive assembly comprises a housing configured to accommodate the drive unit, and to provide means for mounting the drive assembly to the device. The housing provides interfaces for connecting the different components of the drive unit.

In a further possible implementation form of the second aspect, the housing is connected to the second frame of the device, facilitating assembly of the device.

In a further possible implementation form of the second aspect, the housing provides at least one guiderail to keep the split nuts properly oriented and restricted from rotating around the screw rotation axis.

In a further possible implementation form of the second aspect, the split nuts are restricted from rotating around the screw rotation axis through their respective connection interfaces, for example allowing the connection to be to a battery housing.

In a further possible implementation form of the second aspect, the device frames include guiderails of their own to constrain their movement to directions parallel to the screw rotation axis.

In a further possible implementation form of the second aspect, the display ends are also restricted to movement in directions parallel to the screw rotation axis, wherein their movement may be constrained by means other than the connection interfaces, ensuring the rolling display moves along a fixed track without distorting.

In a further possible implementation form of the second aspect, the screw rotation axis is parallel to an extension direction of the rolling display device, the display bend axis is perpendicular to the screw rotation axis, the screw rotation axis and the display bend axis together defining a rolling display pane and a vertical axis perpendicular to the rolling display pane; and wherein the first split nut comprises a first connection interface for connecting to the fixed display end of the rolling display; and the second split nut comprises a second connection interface for connecting to the moving display end of the rolling display. This allows the different components of any specific device to be interconnected in the most suitable manner.

These and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Figs. 1A and 1B show cross-sectional views of an example of a prior art rolling display device, the device being collapsed and extended, respectively;
Fig. 1C shows a cross-sectional view illustrating the formation of a bump on the display panel of the prior art example shown in Figs. 1A and 1B;
Figs. 2A and 2B show perspective views of an example of a prior art rolling display device, the device being collapsed and extended, respectively:
   Fig. 3 shows a cross-sectional view of a rolling display device according to an example of the embodiments of the disclosure, the drive assembly of the device being in a first position;
   Fig. 4 shows a cross-sectional view of a rolling display device according to an example of the embodiments of the disclosure, the drive assembly of the device being in a second position;
   Figs. 5A and 5B show top views of an example of a rolling display device according to an example of the embodiments of the disclosure, the device being collapsed and extended, respectively:
      Fig. 6 shows a side view of a drive assembly according to an example of the embodiments of the disclosure, illustrating possible directions of movement of selected components;
      Fig. 7 shows a perspective view of a drive assembly according to an example of the embodiments of the disclosure, illustrating possible directions of movement of selected components;
      Fig. 8 shows a perspective view of a split nut of a drive assembly according to an example of the embodiments of the disclosure;
      Fig. 9 shows a perspective view of a lead screw of a drive assembly according to an example of the embodiments of the disclosure;
      Fig. 10 shows perspective views of an example of a rolling display device according to an example of the embodiments of the disclosure, the device being collapsed and extended, respectively:
         Fig. 11 shows perspective views of an example of a rolling display device according to an example of the embodiments of the disclosure, the device being collapsed and extended, respectively:
         Fig. 12 shows a perspective view of a part of a drive assembly according to an example of the embodiments of the disclosure;
         Figs. 13 to 15 show perspective cross-sectional views of parts of a drive assembly according to an example of the embodiments of the disclosure;
         Fig. 16 and 17 show perspective cross-sectional views of parts of a drive assembly according to an example of the embodiments of the disclosure;
         Fig. 18 shows a perspective view of a part of the drive assembly shown in Figs. 16 and 17;
         Fig. 19 shows a perspective view of a part of a drive assembly according to an example of the embodiments of the disclosure;
         Fig. 20 shows a perspective view of a part of a drive assembly according to an example of the embodiments of the disclosure;
         Fig. 21 shows a perspective view of a part of a drive assembly according to an example of the embodiments of the disclosure;
         Fig. 22 shows a perspective view of a part of a drive assembly according to an example of the embodiments of the disclosure;
         Fig. 23 shows a perspective view of a part of a drive assembly according to an example of the embodiments of the disclosure;
         Fig. 24 shows cross-sectional views of a lead screw of a drive assembly according to an example of the embodiments of the disclosure;
         Fig. 25 shows cross-sectional views of a lead screw of a drive assembly according to an example of the embodiments of the disclosure;
         Fig. 26 shows cross-sectional views of a lead screw of a drive assembly according to an example of the embodiments of the disclosure;
         Fig. 27 shows cross-sectional views of a lead screw of a drive assembly according to an example of the embodiments of the disclosure;
         Fig. 28 shows a partial cross-sectional view of two split nuts of a drive assembly according to an example of the embodiments of the disclosure.

### DETAILED DESCRIPTION

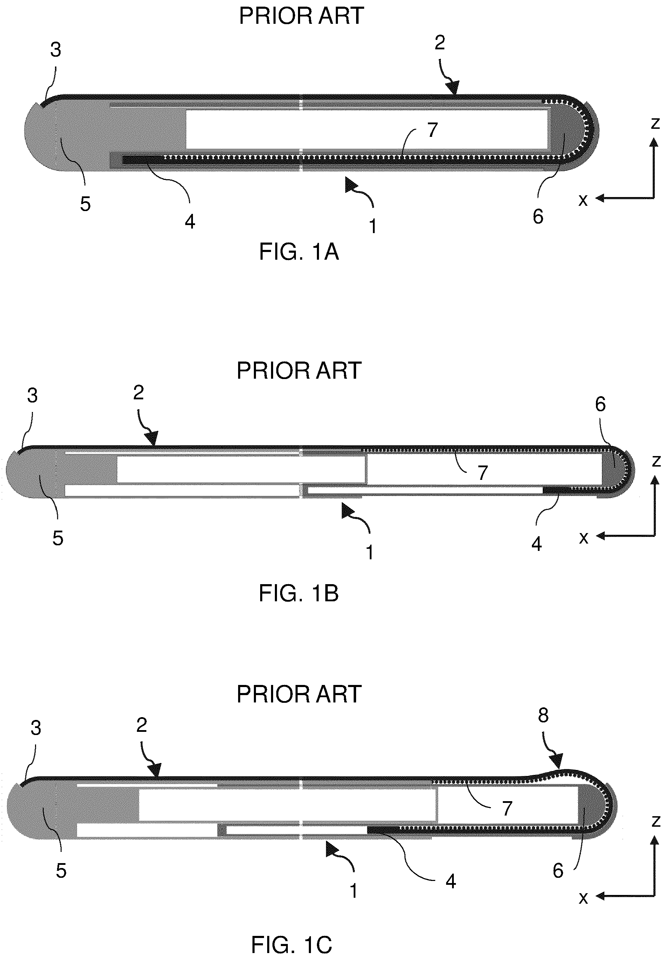

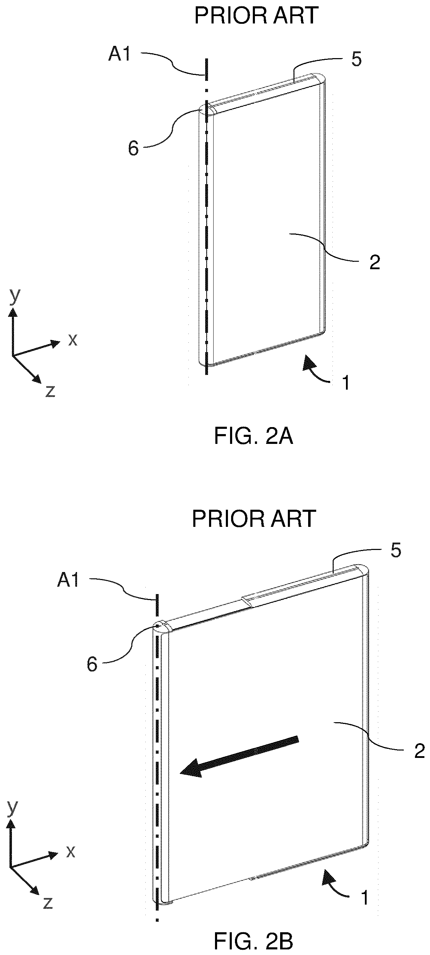

Figs. 1A and 1B show of an example of a prior art rolling display device, wherein the device has been collapsed and extended, respectively. Fig. 1C illustrates the formation of a bump on the display panel this prior art example. Figs. 2A and 2B also show an example of a collapsed and extended prior art rolling display device.

The present invention relates to a drive assembly 9 for a rolling display, the drive assembly 9 comprising a lead screw 10; a drive unit 15 configured to rotate the lead screw 10 around a screw rotation axis A2; a first split nut 11 arranged adjacent to the lead screw 10; a second split nut 12 arranged adjacent to the lead screw 10 on an opposite side thereof with respect to the first split nut 11; wherein both the first split nut 11 and the second split nut 12 are restricted from rotating around the screw rotation axis A2; wherein the lead screw 10 is threaded bi-directionally with opposing screw threads 18a, 18b for converting the rotational movement of the lead screw 10 into longitudinal movement of the first split nut 11 and the second split nut 12 in opposing directions along the screw rotation axis A2; wherein the opposing screw threads 18a, 18b are arranged to at least partially overlap along the length of the lead screw 10; and wherein the first split nut 11 and the second split nut 12 are shaped as partial radial segments of a whole nut arranged to fit around the lead screw 10.

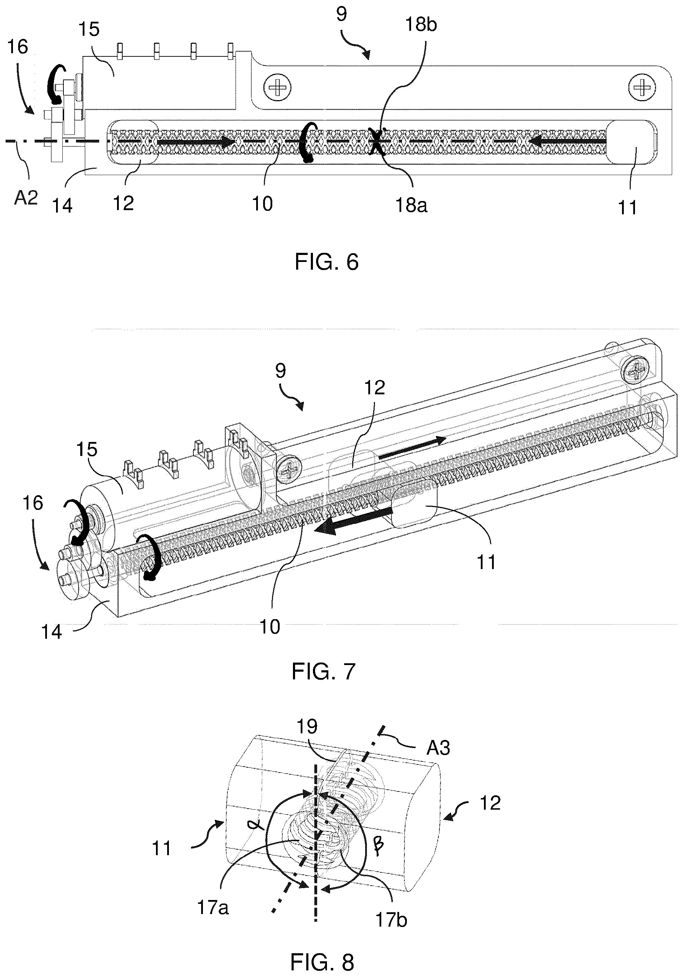

Figs. 6 and 7 show a drive assembly 9 for a rolling display, the drive assembly 9 comprising a lead screw 10 and a drive unit 15 configured to rotate the lead screw 10 around a screw rotation axis A2.

As illustrated in Fig. 6, a first split nut 11 is arranged adjacent to the lead screw 10 and a second split nut 12 is arranged adjacent to the lead screw 10 on an opposite side thereof with respect to the first split nut 11. Both the first split nut 11 and the second split nut 12 are restricted from rotating around the screw rotation axis A2, i.e. the rotational movement of the lead screw 10 is transformed to linear movement of the first split nut 11 and the second split nut 12 along the screw rotation axis A2.

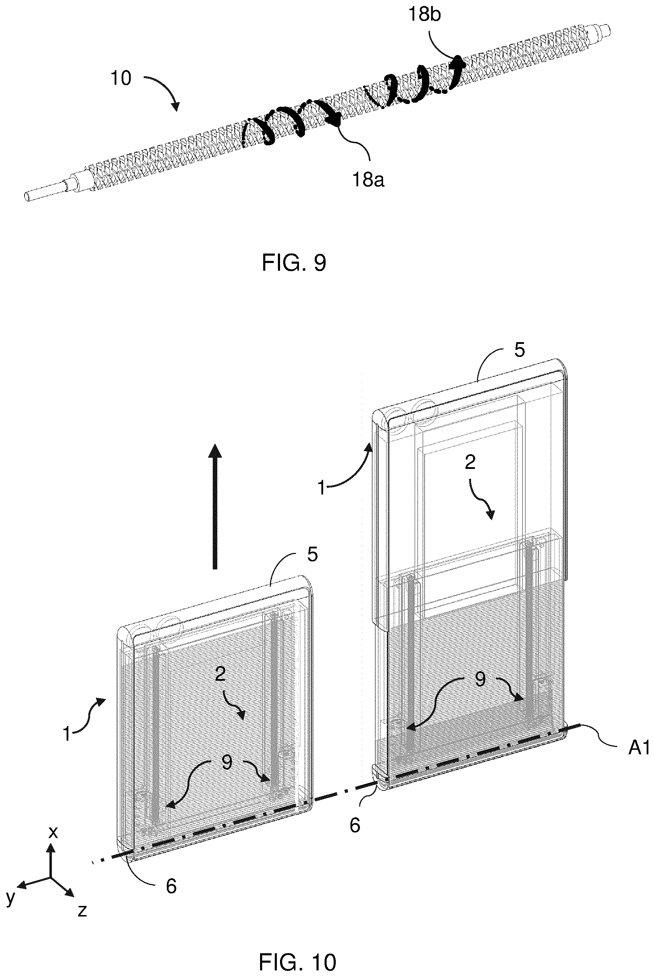

The lead screw 10 is threaded bi-directionally with opposing screw threads 18a, 18b for converting the rotational movement of the lead screw 10 into longitudinal movement of the first split nut 11 and the second split nut 12 in opposing directions along the screw rotation axis A2, as illustrated by means of arrows in Figs. 7 and 9.

The opposing screw threads 18a, 18b are arranged to at least partially overlap along the length of the lead screw 10, as illustrated in Figs. 6, 9, and Figs 24 to 27. This overlap allows both the first split nut 11 and the second split nut 12 to move along the entire length of the lead screw 10, i.e. the first split nut 11 and the second split nut 12 to swap positions.

The first split nut 11 and the second split nut 12 are shaped as partial radial segments of a whole nut arranged to fit around the lead screw 10. This allows the first split nut 11 and the second split nut 12 to be arranged on the same lead screw 10 and to pass each other as they swap positions, while still maintaining as much contact area as possible with the lead screw 10.

As illustrated in Fig. 8, the first split nut 11 may be shaped as a partial radial segment of a whole nut corresponding to a first sector angle α, the second split nut 12 may be shaped as a partial radial segment of a whole nut corresponding to a second sector angle β, and the first sector angle α and second sector angle β may together add up to equal to or less than 360 degrees. This facilitates finding a balance between manufacturing tolerances and ease of assembly, and contact area. The contact area with the lead screw 10 should be as large as possible in order to reduce the strain on the threads, which may lead to a shortened life span due to cracking under stress.

The first split nut 11 and the second split nut 12 may be shaped to allow for a clearance 19 in between when traveling past each other along the lead screw 10 in opposite directions. The clearance 19 may be achieved by means of the above-mentioned sector angles α, β, however, other solutions are conceivable.

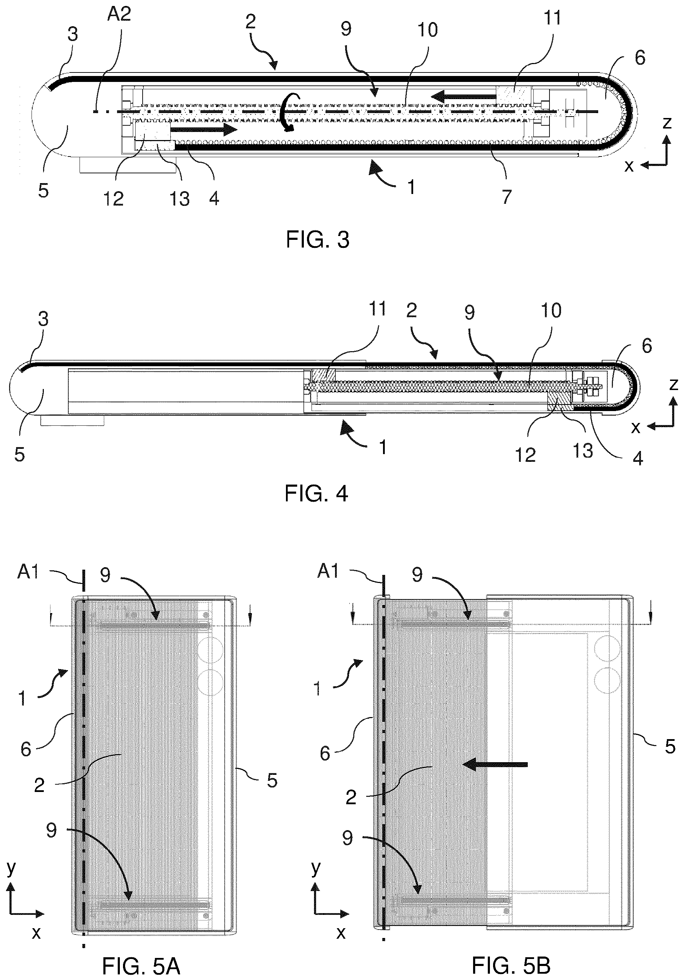

The drive assembly 9 may be in a first position, as shown in Fig. 3, and in a second position, as shown in Fig. 4. In the first position, the first split nut 11 is arranged at a first end of the lead screw 10 and the second split nut 12 is arranged at a second end of the lead screw 10. In the second position of the drive assembly 9 the first split nut 11 is arranged at the second end of the lead screw 10 and the second split nut 12 is arranged at the first end of the lead screw 10, i.e., the first split nut 11 and the second split nut 12 have changed places along the screw rotation axis A2. However, the first split nut 11 and the second split nut 12 still remain on opposite sides of the lead screw 10.

Screw threads 18a, 18b may be arranged such that the first screw thread 18a matches the second screw thread 18b, resulting in the display end velocities being identical, thus the display tension remaining constant during the opening/closing operation.

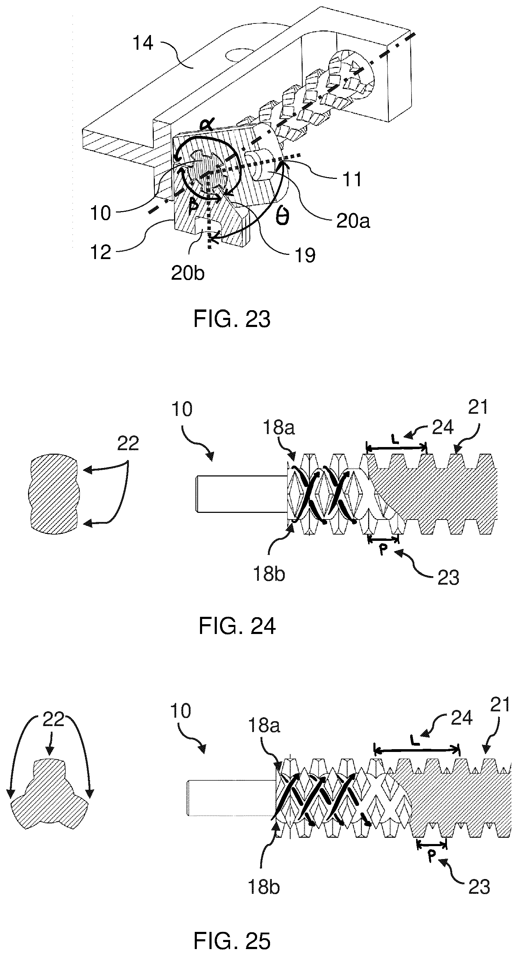

The first screw thread 18a and the second screw thread 18b may both be arranged with two thread starts 22, as shown in Fig. 24. This configuration is well-functioning enough for most types of lead screws.

The first screw thread 18a and the second screw thread 18b may both be arranged with three thread starts 22, as shown in Fig. 25. This allows a more accurate fit to specific display dimensions and also facilitates assembly.

Nut threads 17a, 17b and screw threads 18a, 18b may also be arranged with different thread profiles, number of starts, and/or pitches, allowing different tensioning options.

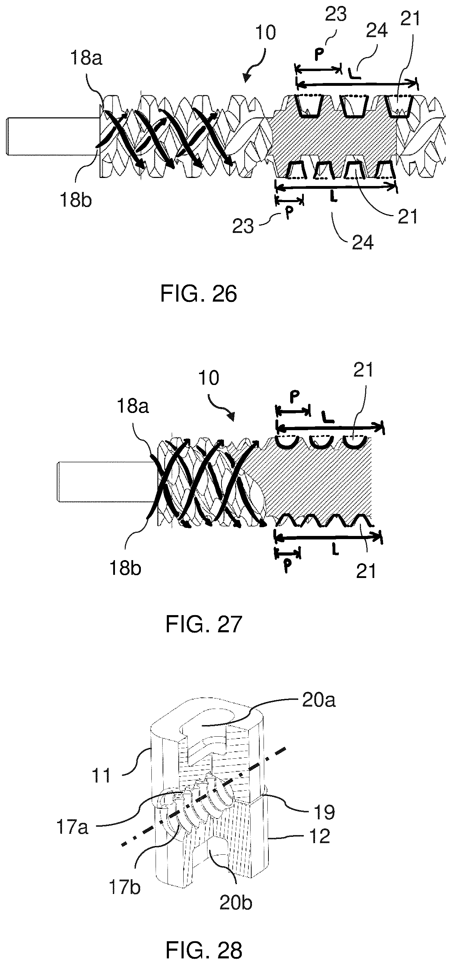

For example, the first screw thread 18a may differ from the second screw thread 18b in at least one of thread size 21, number of thread starts 22, and thread pitches 23. Fig. 26 illustrates an example where the first screw thread 18a differs from the second screw thread 18b in thread pitch.

The first screw thread 18a may also, or instead, differ from the second screw thread 18b in at least the shape of its respective thread profiles 21, as illustrated in Fig. 27. This allows use of different nuts on each end and, hence, more configuration options.

The first split nut 11 may be arranged with a first nut thread 17a and the second split nut 12 may be arranged with a second nut thread 17b, as shown in Fig. 28. The lead screw 10 may comprise a first screw thread 18a corresponding to the first nut thread 17a arranged thereon for slidably guiding the first split nut 11 and a second screw thread 18b corresponding to the second nut thread 17b arranged thereon for slidably guiding the second split nut 12 in an opposite direction to the first split nut 11 along the screw rotation axis A2.

The first nut thread 17a and the second nut thread 17b of the respective split nuts 11,12 may be arranged with a single thread axis A3, see Fig. 8, that is coincident with lead screw rotation axis A2 when assembled in the drive assembly 9.

The present invention furthermore relates to a rolling display device 1 comprising: a first frame 5, and a second frame 6 configured to slidably move relative to the first frame 5; a rolling display 2 comprising a fixed display end 3 fixedly attached to the first frame 5 and a moving display end 4 slidably connected to the second frame 6, at least a portion of the rolling display 2 being arranged to roll around a display bend axis A1 located in the second frame 6; and a drive assembly 9 as previously detailed; wherein the first split nut 11 of the drive assembly 9 is connected to the fixed display end 3, and the second split nut 12 of the drive assembly 9 is connected to the moving display end 4, the drive assembly 9 being thus configured to move the display bend axis A1 relative to the fixed display end 3, thereby adjusting an effective display area of the flexible display 2.

Figs. 3 to 5B show a rolling display device 1, such as a smartphone, tablet or other display device e.g. a monitor or tv, comprising a first frame 5 and a second frame 6 configured to slidably move relative to the first frame 5.

The rolling display device 1 comprises a rolling display 2 comprising a fixed display end 3, fixedly attached to the first frame 5, and a moving display end 4, slidably connected to the second frame 6. At least a portion of the rolling display 2 is arranged to roll around a display bend axis A1 located in the second frame 6, as illustrated in Figs. 5A, 5B, 10, and 11.

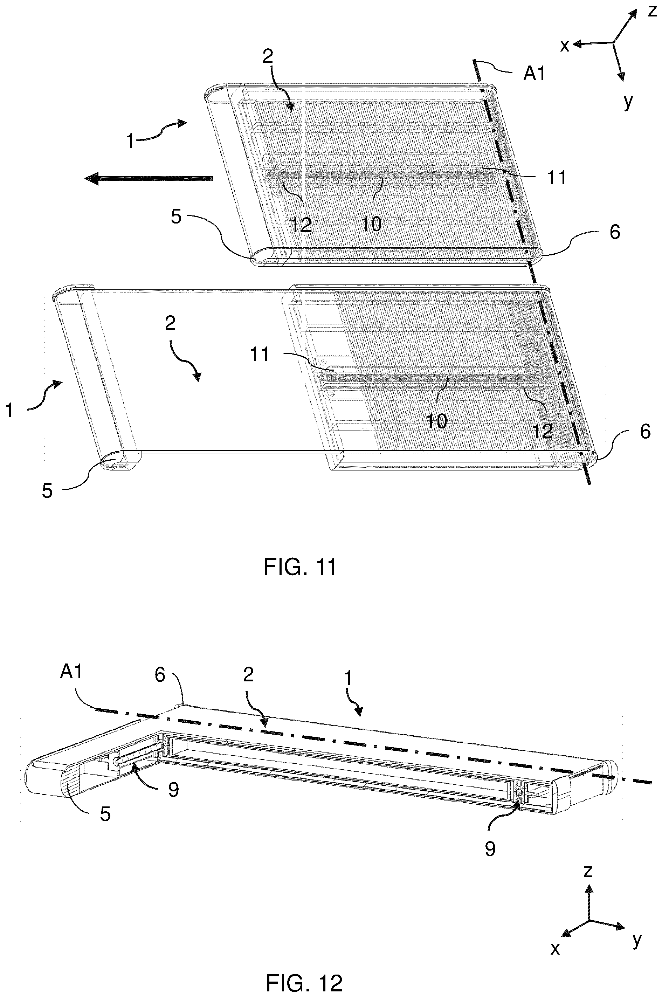

The rolling display device 1 also comprises the drive assembly 9 described above, as shown in Fig. 12. As shown in Fig. 11, the rolling display device 1 may comprise a single drive assembly 9 for adjusting an effective display area of the flexible display 2. As shown in Figs. 5 and 10, the rolling display device 1 may comprise two drive assemblies 9 arranged in parallel for adjusting an effective display area of the flexible display 2.

As shown in Fig. 4, the drive assembly 9 may be located on the second frame 6, in which the display bend axis A1 is located.

The first split nut 11 of the drive assembly 9 is connected to the fixed display end 3 of the rolling display 2, and the second split nut 12 of the drive assembly 9 is connected to the moving display end 4 of the rolling display 2. The drive assembly 9 is thus configured to move the display bend axis A1 relative to the fixed display end 3, thereby adjusting an effective display area of the flexible display 2, as illustrated by Figs. 5A, 5B, 10, and 11. In other words, when moving in one direction the first split nut 11 pushes the display 2 while the second split nut 12 pulls the display, and the opposite when moving the display in the other direction.

One or both of the split nuts 11, 12 may be individual components or may be directly integrated to another component, e.g. a frame or the display support plate.

The first split nut 11 may be indirectly connected to the fixed display end 3, through a rigid connection with the first frame 5. Furthermore, the first split nut 11 may be arranged at a distance from the distal end of the fixed display end 3, the distance being at least a portion of the length of the lead screw 10, preferably at least the entire length of the lead screw 10. As illustrated in Figs. 3 and 4, the distance between the first split nut 11 and the distal end of the fixed display end 3 varies depending on whether the device is collapsed or extended.

The second split nut 12 may be indirectly connected to the moving display end 4 via a support plate 13, the support plate 13 being connected to or integral with a flexible display support 7 attached to the moving display end 4. The support plate 13 and the flexible display support 7 may be arranged to slide in the second frame 6, as shown in Figs. 3 and 4. The display 2 and/or the flexible display support 7 may be pre-tensioned.

The drive assembly 9 may comprise a drive unit 15 with a shaft, as illustrated in Figs. 6 and 7, the rotation of the shaft being directly or indirectly coupled to the rotation of the lead screw 10.

The rotation of the shaft may be indirectly coupled to the rotation of the lead screw 10 through a gearbox 16 between the drive unit 15 and the lead screw 10, which may change the rotation rate and/or direction between the drive unit 15 and the lead screw 10.

The drive unit 15 may be a motor, and the lead screw 10 may be self-locking. The drive unit 15 may instead be manually operated, and the lead screw 10 not self-locking.

The drive assembly 9 may also comprise a housing 14 configured to accommodate the drive unit 15, and to provide means for mounting the drive assembly 9 to the device 1. The housing 14 may be connected to the second frame 6 of the device 1.

The housing 14 may provide at least one guiderail to keep the split nuts 11, 12 properly oriented and restricted from rotating around the screw rotation axis A2.

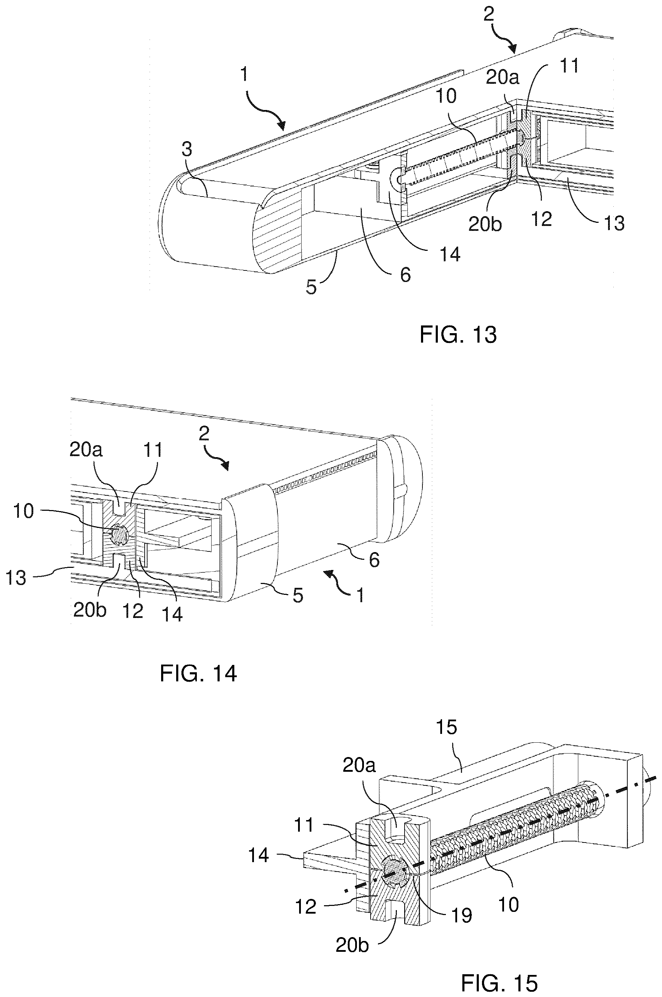

The split nuts 11,12 may also be restricted from rotating around the screw rotation axis A2 through their respective connection interfaces 20a,20b. The connection interfaces 20a, 20b may be rigid or flexible and may have any suitable configuration. Figs. 13, 14, 16, and 17, for example shows two connection interfaces 20a, 20b in the form of a protrusion mating with a recess in the split nut 11,12. Examples of split nuts 11,12 and recesses 20a, 20b are shown in Fig. 28.

The device frames 5,6 may also include guiderails of their own to constrain their movement to directions parallel to the screw rotation axis A2. Furthermore, the display ends 3,4 may also be restricted to movement in directions parallel to the screw rotation axis A2, wherein their movement may be constrained by means other than the connection interfaces 20.

The screw rotation axis A2 may be parallel to an extension direction x of the rolling display device 1, the display bend axis A1 being perpendicular to the screw rotation axis A2. The screw rotation axis A2 and the display bend axis A1 together define a rolling display pane and a vertical axis z perpendicular to the rolling display pane. As shown in Figs. 13 to 23, the first split nut 11 comprises a first connection interface 20a for connecting to the fixed display end 3 of the rolling display 2, and the second split nut 12 comprises a second connection interface 20b for connecting to the moving display end 4 of the rolling display 2.

The following figures and corresponding passages are not covered by the claims.

As shown in Figs. 13 to 15, the first split nut 11 and the second split nut 12 may be arranged on opposite sides of the lead screw 10 along a vertical axis z, with a clearance 19 arranged between the first split nut 11 and the second split nut 12 parallel to the rolling display pane, and the respective connection interfaces 20a, 20b both arranged along the vertical axis z facing away from the clearance 19. This allows for easy assembly and is a configuration that would suit most devices.

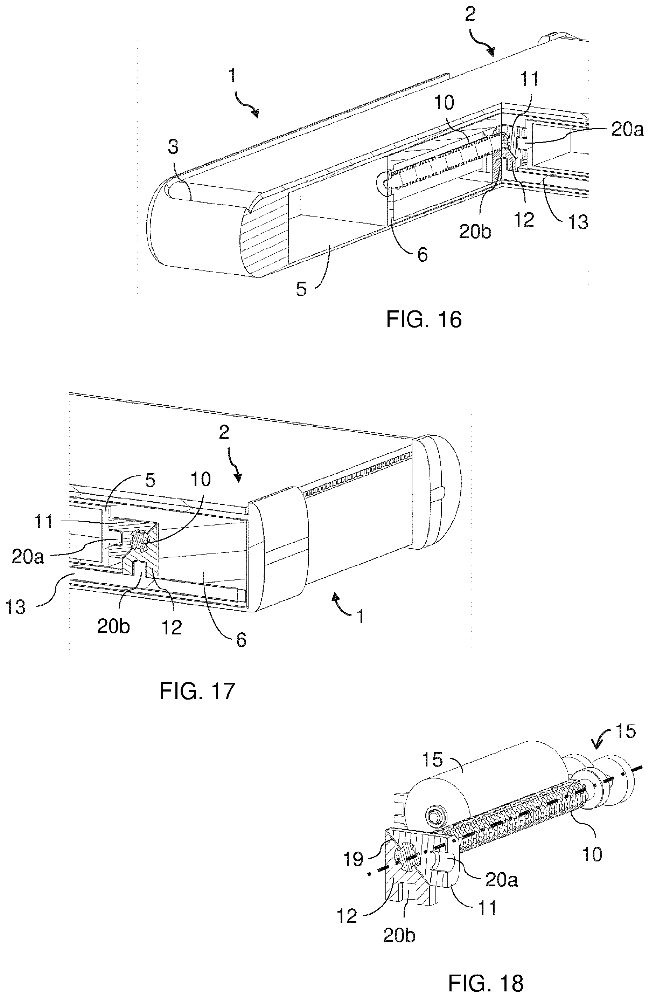

As shown in Figs. 16 to 18, the first split nut 11 and the second split nut 12 may be arranged perpendicular to each other with one of them oriented along a vertical axis z, with a clearance 19 arranged between the first split nut 11 and the second split nut 12 at a slanted angle to the rolling display pane. The respective connection interfaces 20a, 20b of the split nuts 11,12 are arranged parallel to the display bend axis A1 and the vertical axis z respectively, both facing away from the clearance 19 at an angle. This provides additional flexibility when only one connection point can be designed along vertical axis, due to e.g. restricted device dimensions. Furthermore, the slanted gap facilitates keeping the split nuts 11, 12 in place as vertical separation won't separate the nuts from the screw.

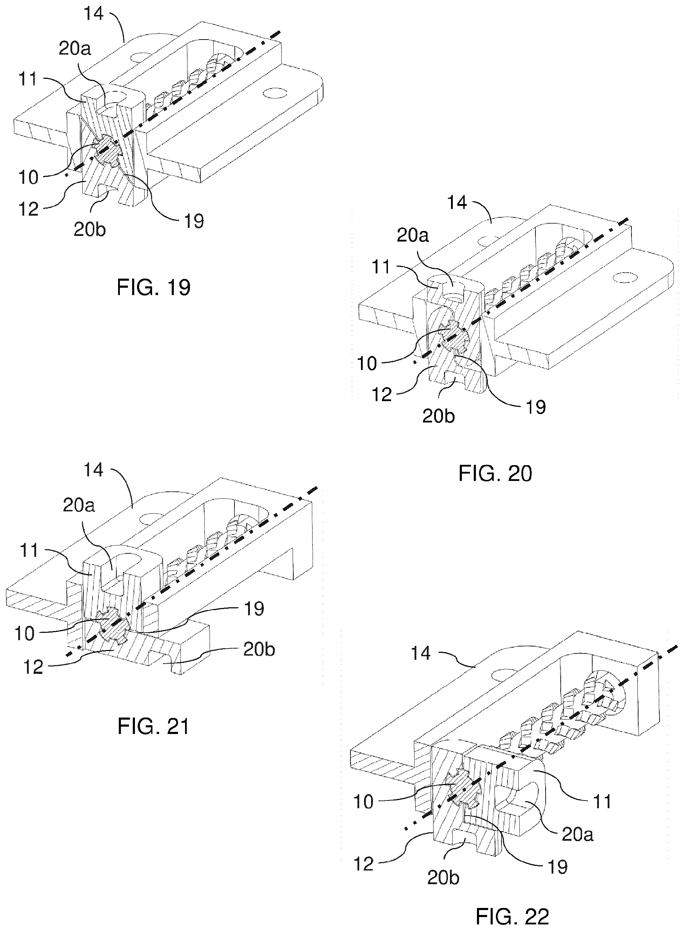

As shown in Fig. 19, the first split nut 11 and the second split nut 12 may be arranged on opposite sides of the lead screw 10 both oriented along a vertical axis z, with a clearance 19 arranged between the first split nut 11 and the second split nut 12 at a slanted angle to the rolling display pane. The respective connection interfaces 20a, 20b of the split nuts 11,12 are both arranged along the vertical axis z facing away from the clearance 19, both facing away from the clearance 19 at an angle. The slanted angle keeps the split nuts 11, 12 better in place as vertical separation won't separate the nuts from the screw, while still allowing vertical connection points.

As shown in Fig. 20, the first split nut 11 and the second split nut 12 may be arranged on opposite sides of the lead screw 10 both oriented along a vertical axis z, with a clearance 19 arranged between the first split nut 11 and the second split nut 12 in a pane perpendicular to the rolling display pane, and the respective connection interfaces 20a, 20b both arranged along the vertical axis z facing away from the clearance 19. Such a vertical gap provides additional flexibility when only one connection point can be designed along vertical axis, and facilitates keeping the split nuts 11, 12 in place.

As shown in Fig. 21, the first split nut 11 and the second split nut 12 may be arranged on opposite sides of the lead screw 10 both oriented along a vertical axis z, with a clearance 19 arranged between the first split nut 11 and the second split nut 12 in a pane parallel to the rolling display pane. The first connection interface 20a is arranged along a first vertical axis z1 facing away from the clearance 19, and the second connection interface 20b is arranged along a second vertical axis z2 offset from the first vertical axis z1 in a direction parallel to the display bend axis A1. This allows for very specific device configurations, if needed.

As shown in Fig. 22, the first split nut 11 and the second split nut 12 may be arranged perpendicular to each other with one of them oriented along a vertical axis z, with a clearance 19 arranged between the first split nut 11 and the second split nut 12 in a pane perpendicular to the rolling display pane, and the respective connection interfaces 20a, 20b of the split nuts 11,12 arranged parallel to the display bend axis A1 and the vertical axis z respectively. This provides additional flexibility when only one connection point can be designed along vertical axis, due to e.g. restricted device dimensions, in particular limited thickness.

As shown in Fig. 23, the first split nut 11 and the second split nut 12 may be arranged at an angle, with a clearance 19 arranged between the first split nut 11 and the second split nut 12 splitting the split nuts 11,12 into partial radial segments of a whole nut corresponding to a first sector angle α and a different second sector angle β respectively. The respective connection interfaces 20a, 20b of the split nuts 11,12 are arranged at an angle θ between 0 and 180 degrees with respect to each other. Such a solution may be advantageous to be able to fit the drive unit 15 into specific device configurations.

The various aspects and implementations have been described in conjunction with various embodiments herein. In the claims, the word "comprising" does not exclude other elements or steps, and the indefinite article "a" or "an" does not exclude a plurality.

The reference signs used in the claims shall not be construed as limiting the scope.

## Claims

1. A drive assembly (9) for a rolling display, the drive assembly (9) comprising:
a lead screw (10);
a drive unit (15) configured to rotate the lead screw (10) around a screw rotation axis (A2);
a first split nut (11) arranged adjacent to the lead screw (10);
a second split nut (12) arranged adjacent to the lead screw (10) on an opposite side thereof with respect to the first split nut (11);
wherein both the first split nut (11) and the second split nut (12) are restricted from rotating around the screw rotation axis (A2);
wherein the lead screw (10) is threaded bi-directionally with opposing screw threads (18a, 18b) for converting the rotational movement of the lead screw (10) into longitudinal movement of the first split nut (11) and the second split nut (12) in opposing directions along the screw rotation axis (A2);
wherein the opposing screw threads (18a, 18b) are arranged to at least partially overlap along the length of the lead screw (10); and
wherein the first split nut (11) and the second split nut (12) are shaped as partial radial segments of a whole nut arranged to fit around the lead screw (10).

2. The drive assembly (9) according to claim 1, wherein
the first split nut (11) is shaped as a partial radial segment of a whole nut corresponding to a first sector angle (α);
the second split nut (12) is shaped as a partial radial segment of a whole nut corresponding to a second sector angle (β); and
wherein the first sector angle (α) and second sector angle (β) together adds up to equal or less than 360 degrees.

3. The drive assembly (9) according to any preceding claim, wherein the first split nut (11) and the second split nut (12) are shaped to allow for a clearance (19) in between when traveling past each other along the lead screw (10) in opposite directions.

4. The drive assembly (9) according to any preceding claim, wherein
in a first position of the drive assembly (9) the first split nut (11) is arranged at a first end of the lead screw (10) and the second split nut (12) is arranged at a second end of the lead screw (10); and wherein
in a second position of the drive assembly (9) the first split nut (11) is arranged at the second end of the lead screw (10) and the second split nut (12) is arranged at the first end of the lead screw (10).

5. The drive assembly (9) according to any preceding claim, wherein a first nut thread (17a) and a second nut thread (17b) of the respective split nuts (11,12) are arranged with a single thread axis (A3) that is coincident with lead screw rotation axis (A2) when assembled in the drive assembly (9).

6. The drive assembly (9) according to any preceding claim, wherein
the first split nut (11) is arranged with a first nut thread (17a);
the second split nut (12) is arranged with a second nut thread (17b); and wherein
the lead screw (10) comprises a first screw thread (18a) corresponding to the first nut thread (17a) arranged thereon for slidably guiding the first split nut (11) and
a second screw thread (18b) corresponding to the second nut thread (17b) arranged thereon for slidably guiding the second split nut (12) in an opposite direction to the first split nut (11) along the screw rotation axis (A2).

7. A rolling display device (1) comprising:
a first frame (5), and a second frame (6) configured to slidably move relative to the first frame (5);
a rolling display (2) comprising a fixed display end (3) fixedly attached to the first frame (5) and a moving display end (4) slidably connected to the second frame (6), at least a portion of the rolling display (2) being arranged to roll around a display bend axis (A1) located in the second frame (6); and
a drive assembly (9) according to any preceding claim; wherein
the first split nut (11) of the drive assembly (9) is connected to the fixed display end (3), and the second split nut (12) of the drive assembly (9) is connected to the moving display end (4), the drive assembly (9) being thus configured to move the display bend axis (A1) relative to the fixed display end (3), thereby adjusting an effective display area of the flexible display (2).

8. The rolling display device (1) according to claim 7, wherein the first split nut (11) is indirectly connected to the fixed display end (3), through a rigid connection with the first frame (5).

9. **The** rolling display device (1) according to any one of claims 7 or 8, wherein the second split nut (12) is indirectly connected to the moving display end (4) via a support plate (13), the support plate (13) being connected to or integral with a flexible display support (7) attached to the moving display end (4).

10. The rolling display device (1) according to any one of claims 7 to 9, wherein the drive assembly (9) is located on the second frame (6), in which the display bend axis (A1) is located.

11. The rolling display device (1) according to any one of claims 7 to 10, wherein the drive assembly (9) comprises a drive unit (15) with a shaft, the rotation of the shaft being directly or indirectly coupled to the rotation of the lead screw (10).

12. The rolling display device (1) according to claim 11, wherein the rotation of the shaft is indirectly coupled to the rotation of the lead screw (10) through a gearbox (16) between the drive unit (15) and the lead screw (10), which may change the rotation rate and/or direction between the drive unit (15) and the lead screw (10).

13. The rolling display device (1) according to any one of claims 11 or 12, wherein the drive assembly (9) comprises a housing (14) configured to accommodate the drive unit (15), and to provide means for mounting the drive assembly (9) to the device (1).

14. The rolling display device (1) according to claim 13, wherein the housing (14) is connected to the second frame (6) of the device (1).

15. The rolling display device (1) according to any one of claims 7 to 14, wherein
the screw rotation axis (A2) is parallel to an extension direction (x) of the rolling display device (1), the display bend axis (A1) is perpendicular to the screw rotation axis (A2), the screw rotation axis (A2) and the display bend axis (A1) together defining a rolling display pane and a vertical axis (z) perpendicular to the rolling display pane; and wherein
the first split nut (11) comprises a first connection interface (20a) for connecting to the fixed display end (3) of the rolling display (2); and
the second split nut (12) comprises a second connection interface (20b) for connecting to the moving display end (4) of the rolling display (2).

## Patentansprüche

1. Antriebsanordnung (9) für eine Rollanzeige, wobei die Antriebsanordnung (9) Folgendes umfasst:
eine Leitspindel (10);
eine Antriebseinheit (15), die dafür gestaltet ist, die Leitspindel (10) um eine Spindeldrehachse (A2) zu drehen;
eine erste geteilte Mutter (11), die angrenzend an die Leitspindel (10) angeordnet ist; eine zweite geteilte Mutter (12), die in Bezug auf die erste geteilte Mutter (11) an einer gegenüberliegenden Seite der Leitspindel (10) angrenzend an selbige angeordnet ist;
wobei sowohl die erste geteilte Mutter (11) als auch die zweite geteilte Mutter (12) in der Drehung um die Spindeldrehachse (A2) eingeschränkt sind;
wobei die Leitspindel (10) mit einem bidirektionalen Gewinde mit entgegengesetzten Spindelgewindegängen (18a, 18b) zum Umwandeln der Drehbewegung der Leitspindel (10) in eine Längsbewegung der ersten geteilten Mutter (11) und der zweiten geteilten Mutter (12) in entgegengesetzte Richtungen entlang der Spindeldrehachse (A2) versehen ist;
wobei die entgegengesetzten Spindelgewindegänge (18a, 18b) derart angeordnet sind, dass sie einander entlang der Länge der Leitspindel (10) zumindest teilweise überlagern; und
wobei die erste geteilte Mutter (11) und die zweite geteilte Mutter (12) als teilweise radiale Segmente einer ganzen Mutter geformt sind, die derart angeordnet sind, dass sie um die Leitspindel (10) passen.

2. Antriebsanordnung (9) nach Anspruch 1, wobei
die erste geteilte Mutter (11) als ein teilweises radiales Segment einer ganzen Mutter geformt ist, das einem ersten Sektorwinkel (α) entspricht;
die zweite geteilte Mutter (12) als ein teilweises radiales Segment einer ganzen Mutter geformt ist, das einem zweiten Sektorwinkel (β) entspricht; und
wobei sich der erste Sektorwinkel (α) und der zweite Sektorwinkel (β) zusammen auf kleiner oder gleich 360 Grad summieren.

3. Antriebsanordnung (9) nach einem vorhergehenden Anspruch, wobei die erste geteilte Mutter (11) und die zweite geteilte Mutter (12) derart geformt sind, dass zwischen ihnen ein Freiraum (19) ermöglicht ist, wenn sie entlang der Leitspindel (10) in entgegengesetzte Richtungen aneinander vorbeigehen.

4. Antriebsanordnung (9) nach einem vorhergehenden Anspruch, wobei
in einer ersten Position der Antriebanordnung (9) die erste geteilte Mutter (11) an einem ersten Ende der Leitspindel (10) angeordnet ist und die zweite geteilte Mutter (12) an einem zweiten Ende der Leitspindel (10) angeordnet ist; und wobei
in einer zweiten Position der Antriebanordnung (9) die erste geteilte Mutter (11) an dem zweiten Ende der Leitspindel (10) angeordnet ist und die zweite geteilte Mutter (12) an dem ersten Ende der Leitspindel (10) angeordnet ist.

5. Antriebsanordnung (9) nach einem vorhergehenden Anspruch, wobei ein erstes Muttergewinde (17a) und ein zweites Muttergewinde (17b) der entsprechenden geteilten Muttern (11, 12) mit einer einzigen Gewindeachse (A3) angeordnet sind, die im zusammengefügten Zustand der Antriebsanordnung (9) mit der Leitspindeldrehachse (A2) zusammenfällt.

6. Antriebsanordnung (9) nach einem vorhergehenden Anspruch, wobei
die erste geteilte Mutter (11) mit einem ersten Muttergewinde (17a) angeordnet ist,
die zweite geteilte Mutter (12) mit einem zweiten Muttergewinde (17b) angeordnet ist; und wobei
die Leitspindel (10) ein erstes Spindelgewinde (18a) umfasst, das dem ersten Muttergewinde (17a) entspricht, das daran angeordnet ist, um die erste geteilte Mutter (11) gleitend zu führen; und
ein zweites Spindelgewinde (18b), das dem zweiten Muttergewinde (17b) entspricht, das daran angeordnet ist, um die zweite geteilte Mutter (12) entlang der Spindeldrehachse (A2) in entgegengesetzter Richtung zu der ersten geteilten Mutter (11) gleitend zu führen.

7. Rollanzeigevorrichtung (1), Folgendes umfassend:
ein erstes Gestell (5) und ein zweites Gestell (6), das dafür gestaltet ist, sich relativ zu dem ersten Gestell (5) gleitend zu bewegen;
eine Rollanzeige (2), die ein feststehendes Anzeigeende (3) umfasst, das fest an dem ersten Gestell (5) angebracht ist, und ein bewegliches Anzeigeende (4), das gleitfähig mit dem zweiten Gestell (6) verbunden ist, wobei mindestens ein Abschnitt der Rollanzeige (2) dafür angeordnet ist, um eine Anzeigebiegeachse (A1) zu rollen, die sich in dem zweiten Gestell (6) befindet; und
eine Antriebsanordnung (9) nach einem vorhergehenden Anspruch; wobei
die erste geteilte Mutter (11) der Antriebsanordnung (9) mit dem feststehenden Anzeigeende (3) verbunden ist und die zweite geteilte Mutter (12) der Antriebsanordnung (9) mit dem beweglichen Anzeigeende (4) verbunden ist, wobei die Antriebsanordnung (9) somit dafür gestaltet ist, die Anzeigebiegeachse (A1) relativ zu dem feststehenden Anzeigeende (3) zu bewegen, wodurch ein effektiver Anzeigebereich der flexiblen Anzeige (2) eingestellt wird.

8. Rollanzeigevorrichtung (1) nach Anspruch 7, wobei die erste geteilte Mutter (11) durch eine starre Verbindung mit dem ersten Gestell (5) indirekt mit dem feststehenden Anzeigeende (3) verbunden ist.

9. Rollanzeigevorrichtung (1) nach Anspruch 7 oder 8, wobei die zweite geteilte Mutter (12) über eine Trägerplatte (13) indirekt mit dem beweglichen Anzeigeende (4) verbunden ist, wobei die Trägerplatte (13) mit einem flexiblen Anzeigenträger (7) verbunden oder in diesen integriert ist, der an dem beweglichen Anzeigeende (4) angebracht ist.

10. Rollanzeigevorrichtung (1) nach einem der Ansprüche 7 bis 9, wobei sich die Antriebsanordnung (9) an dem zweiten Gestell (6) befindet, in dem sich die Anzeigebiegeachse (A1) befindet.

11. Rollanzeigevorrichtung (1) nach einem der Ansprüche 7 bis 10, wobei die Antriebsanordnung (9) eine Antriebseinheit (15) mit einer Welle umfasst, wobei die Drehung der Welle direkt oder indirekt mit der Drehung der Leitspindel (10) gekoppelt ist.

12. Rollanzeigevorrichtung (1) nach Anspruch 11, wobei die Drehung der Welle durch ein Getriebe (16) zwischen der Antriebseinheit (15) und der Leitspindel (10) indirekt mit der Drehung der Leitspindel (10) gekoppelt ist, was die Drehgeschwindigkeit und/oder -richtung zwischen der Antriebseinheit (15) und der Leitspindel (10) ändern kann.

13. Rollanzeigevorrichtung (1) nach einem der Ansprüche 11 oder 12, wobei die Antriebsanordnung (9) ein Gehäuse (14) umfasst, das dafür gestaltet ist, die Antriebseinheit (15) unterzubringen und Mittel zum Montieren der Antriebsanordnung (9) an der Vorrichtung (1) bereitzustellen.

14. Rollanzeigevorrichtung (1) nach Anspruch 13, wobei das Gehäuse (14) mit dem zweiten Gestell (6) der Vorrichtung (1) verbunden ist.

15. Rollanzeigevorrichtung (1) nach einem der Ansprüche 7 bis 14, wobei
die Spindeldrehachse (A2) parallel zu einer Erstreckungsrichtung (x) der Rollanzeigevorrichtung (1) liegt, die Anzeigebiegeachse (A1) senkrecht zu der Spindeldrehachse (A2) liegt, die Spindeldrehachse (A2) und die Anzeigebiegeachse (A1) zusammen eine Rollanzeigenebene definieren und eine vertikale Achse (z) senkrecht zur Rollanzeigenebene; und wobei
die erste geteilte Mutter (11) eine erste Verbindungsanschlussstelle (20a) zum Verbinden des feststehenden Anzeigenendes (3) der Rollanzeige (2) umfasst; und
die zweite geteilte Mutter (12) eine zweite Verbindungsanschlussstelle (20b) zum Verbinden des beweglichen Anzeigeendes (4) der Rollanzeige (2) umfasst.

## Revendications

1. Ensemble d'entraînement (9) pour un affichage roulant, l'ensemble d'entraînement (9) comportant :
une vis mère (10) ;
une unité d'entraînement (15) configurée de façon à tourner la vis mère (10) autour d'un axe de rotation de la vis (A2) ;
un premier écrou fendu (11) disposé de manière adjacente à la vis mère (10) ;
un deuxième écrou fendu (12) disposé de façon adjacente à la vis mère (10) sur un côté opposé de celle-ci par rapport au premier écrou fendu (11) ;
le premier écrou fendu (11) et le deuxième écrou fendu (12) étant tous les deux restreints de tourner autour de l'axe de rotation de la vis (A2) ;
la vis mère (10) étant filetée de manière bidirectionnelle avec des filetages de vis opposés (18a, 18b) pour convertir le mouvement de rotation de la vis mère (10) en un mouvement longitudinal du premier écrou fendu (11) et du deuxième écrou fendu (12) dans des sens opposés le long de l'axe de rotation de la vis (A2) ;
les filetages de vis opposés (18a, 18b) étant agencés de façon à se chevaucher au moins partiellement le long de la longueur de la vis mère (10) ; et
le premier écrou fendu (11) et le deuxième écrou fendu (12) étant formés comme des segments radiaux partiels d'un écrou complet agencé de façon à s'adapter autour de la vis mère (10).

2. Ensemble d'entraînement (9) selon la revendication 1, dans lequel
le premier écrou fendu (11) est formé comme un segment radial partiel d'un écrou complet correspondant à un premier angle de secteur (α) ;
le deuxième écrou fendu (12) est formé comme un segment radial partiel d'un écrou complet correspondant à un deuxième angle de secteur (β) ; et
le premier angle de secteur (α) et le deuxième angle de secteur (β) formant ensemble un angle égal à, ou plus petit que 360 degrés.

3. Ensemble d'entraînement (9) selon l'une quelconque des revendications précédentes, dans lequel le premier écrou fendu (11) et le deuxième écrou fendu (12) sont formés de façon à avoir un espace (19) entre eux lorsqu'ils se croisent le long de la vis mère (10) dans des sens opposés.

4. Ensemble d'entraînement (9) selon l'une quelconque des revendications précédentes, dans lequel
dans une première position de l'ensemble d'entraînement (9), le premier écrou fendu (11) est disposé à une première extrémité de la vis mère (10) et le deuxième écrou fendu (12) est disposé à une deuxième extrémité de la vis mère (10) ; et dans lequel
dans une deuxième position de l'ensemble d'entraînement (9), le premier écrou fendu (11) est disposé à la deuxième extrémité de la vis mère (10) et le deuxième écrou fendu (12) est disposé à la première extrémité de la vis mère (10).

5. Ensemble d'entraînement (9) selon l'une quelconque des revendications précédentes, dans lequel un premier filetage d'écrou (17a) et un deuxième filetage d'écrou (17b) des écrous fendus respectifs (11, 12) sont agencés avec un seul axe de filetage (A3) qui coïncide avec l'axe de rotation de la vis mère (A2) lorsqu'ils sont assemblés dans l'ensemble d'entraînement (9).

6. Ensemble d'entraînement (9) selon l'une quelconque des revendications précédentes, dans lequel
le premier écrou fendu (11) est agencé avec un premier filetage d'écrou (17a) ;
le deuxième écrou fendu (12) est agencé avec un deuxième filetage d'écrou (17b) ; et dans lequel
la vis mère (10) comporte un premier filetage de vis (18a) correspondant au premier filetage d'écrou (17a) disposé sur celui-ci pour guider par coulissement le premier écrou fendu (11) ; et
un deuxième filetage de vis (18b) correspondant au deuxième filetage d'écrou (17b) agencé sur celui-ci pour guider par coulissement le deuxième écrou fendu (12) dans un sens opposé au premier écrou fendu (11) le long de l'axe de rotation de la vis (A2).

7. Dispositif d'affichage roulant (1) comprenant :
un premier cadre (5) et un deuxième cadre (6) configuré de façon à se déplacer par coulissement par rapport au premier cadre (5) ;
un affichage roulant (2) comportant une extrémité d'affichage fixe (3) attachée de manière fixe au premier cadre (5) et une extrémité d'affichage mobile (4) reliée de manière coulissante au deuxième cadre (6), au moins une partie de l'affichage roulant (2) étant agencée de façon à rouler autour d'un axe de courbure de l'affichage (A1) situé dans le deuxième cadre (6) ; et
un ensemble d'entraînement (9) selon l'une quelconque des revendications précédentes ; dans lequel
le premier écrou fendu (11) de l'ensemble d'entraînement (9) est relié à l'extrémité d'affichage fixe (3), et le deuxième écrou fendu (12) de l'ensemble d'entraînement (9) est relié à l'extrémité d'affichage mobile (4), l'ensemble d'entraînement (9) étant ainsi configuré de façon à déplacer l'axe de courbure de l'affichage (A1) par rapport à l'extrémité d'affichage fixe (3), réglant ainsi une zone d'affichage effective de l'affichage flexible (2).

8. Dispositif d'affichage roulant (1) selon la revendication 7, dans lequel le premier écrou fendu (11) est relié indirectement à l'extrémité d'affichage fixe (3), au moyen d'une liaison rigide avec le premier cadre (5).

9. Dispositif d'affichage roulant (1) selon l'une quelconque des revendications 7 ou 8, dans lequel le deuxième écrou fendu (12) est relié indirectement à l'extrémité d'affichage mobile (4) au moyen d'une plaque de support (13), la plaque de support (13) étant reliée à, ou solidaire d'un support d'affichage flexible (7) attaché à l'extrémité d'affichage mobile (4).

10. Dispositif d'affichage roulant (1) selon l'une quelconque des revendications 7 à 9, dans lequel l'ensemble d'entraînement (9) est situé sur le deuxième cadre (6), dans lequel l'axe de courbure de l'affichage (A1) est situé.

11. Dispositif d'affichage roulant (1) selon l'une quelconque des revendications 7 à 10, dans lequel l'ensemble d'entraînement (9) comporte une unité d'entraînement (15) avec un arbre, la rotation de l'arbre étant reliée directement ou indirectement à la rotation de la vis mère (10).

12. Dispositif d'affichage roulant (1) selon la revendication 11, dans lequel la rotation de l'arbre est reliée indirectement à la rotation de la vis mère (10) au moyen d'une boîte d'engrenage (16) entre l'unité d'entraînement (15) et la vis mère (10), qui peut changer la vitesse et/ou le sens de rotation entre l'unité d'entraînement (15) et la vis mère (10).

13. Dispositif d'affichage roulant (1) selon l'une quelconque des revendications 11 ou 12, dans lequel l'ensemble d'entraînement (9) comporte un boîtier (14) configuré de façon à recevoir l'unité d'entraînement (15), et à fournir un moyen pour monter l'ensemble d'entraînement (9) sur le dispositif (1).

14. Dispositif d'affichage roulant (1) selon la revendication 13, dans lequel le boîtier (14) est relié au deuxième cadre (6) du dispositif (1).

15. Dispositif d'affichage roulant (1) selon l'une quelconque des revendications 7 à 14, dans lequel
l'axe de rotation de la vis (A2) est parallèle à une direction d'extension (x) du dispositif d'affichage roulant (1), l'axe de courbure de l'affichage (A1) est perpendiculaire à l'axe de rotation de la vis (A2), l'axe de rotation de la vis (A2) et l'axe de courbure de l'affichage (A1) définissant ensemble un volet d'affichage roulant et un axe vertical (z) perpendiculaire au volet d'affichage roulant ; et dans lequel
le premier écrou fendu (11) comporte une première interface de liaison (20a) pour relier l'extrémité d'affichage fixe (3) de l'affichage roulant (2) ; et
le deuxième écrou fendu (12) comporte une deuxième interface de liaison (20b) pour relier l'extrémité d'affichage mobile (4) de l'affichage roulant (2).
